(19)

Europäisches
Patentamt
European
Patent Office
Office européen
des brevets

(11) **EP 4 207 371 A1**

(12) **EUROPEAN PATENT APPLICATION**
published in accordance with Art. 153(4) EPC

(43) Date of publication:
**05.07.2023 Bulletin 2023/27**

(21) Application number: **21929519.3**

(22) Date of filing: **09.03.2021**

(51) International Patent Classification (IPC):
**H01M 4/36** $^{(2006.01)}$   **H01M 4/525** $^{(2010.01)}$

(52) Cooperative Patent Classification (CPC):
**Y02E 60/10**

(86) International application number:
**PCT/CN2021/079807**

(87) International publication number:
**WO 2022/188037 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• **ZHANG, Yangyang
  Ningde, Fujian 352100 (CN)**
• **LANG, Ye
  Ningde, Fujian 352100 (CN)**
• **PENG, Gang
  Ningde, Fujian 352100 (CN)**
• **LIU, Wenyuan
  Ningde, Fujian 352100 (CN)**

(74) Representative: **Icosa
  83 avenue Denfert-Rochereau
  75014 Paris (FR)**

(54) **POSITIVE ELECTRODE, ELECTROCHEMICAL DEVICE AND ELECTRONIC DEVICE**

(57)    This application provides a positive electrode, an electrochemical apparatus, and an electronic apparatus. The positive electrode includes a positive electrode current collector and a positive electrode active substance layer, where the positive electrode active substance layer is located in at least partial region of one surface or two surfaces of the positive electrode current collector, the positive electrode active substance layer includes a positive electrode material, and the positive electrode material includes element Li; and when a mass percentage of element Li of the positive electrode in the positive electrode active substance layer as tested using an inductively coupled plasma spectrometer (ICP) ranges from 1.45% to 1.55%, an integral intensity of $CO_2$ obtained by testing the positive electrode using a differential electrochemical mass spectrometry is Q≤2000 nmol/mg. This application can improve high-temperature cycling performance and safety of the electrochemical apparatus.

EP 4 207 371 A1

Processed by Luminess, 75001 PARIS (FR)

**Description**

**TECHNICAL FIELD**

This application relates to the field of electrochemical energy storage, and in particular, to a positive electrode, an electrochemical apparatus, and an electronic apparatus.

**BACKGROUND**

With the development and advancement of electrochemical apparatuses (for example, lithium-ion batteries), increasing requirements are imposed on high-temperature cycling performance and safety performance of the electrochemical apparatuses. Although current technologies for improving electrochemical apparatuses can enhance high-temperature cycling performance and safety performance of the electrochemical apparatuses to some extent, the electrochemical apparatuses are not satisfactory and are expected to be further improved.

**SUMMARY**

Embodiments of this application provide a positive electrode, including a positive electrode current collector and a positive electrode active substance layer, where the positive electrode active substance layer is located in at least partial region of one surface or two surfaces of the positive electrode current collector, the positive electrode active substance layer includes a positive electrode material, and the positive electrode material includes element Li; and when a mass percentage of element Li of the positive electrode in the positive electrode active substance layer as tested using an inductively coupled plasma spectrometer (ICP) ranges from 1.45% to 1.55%, an integral intensity of $CO_2$ obtained by testing the positive electrode using a differential electrochemical mass spectrometry is Q≤2000 nmol/mg.

In some embodiments, the positive electrode material includes $LiNi_xCo_yM1_{1-x-y-z}M2_zO_2$, where 0.5≤x<1, 0≤y<0.5, and 0≤z≤0.005; M1 includes at least one of Mn or Al; and M2 includes at least one of Mg, Ti, Zr, Ce, Sr, Y, Hf, Ba, Nb, V, Al, Ge, Sn, W, Mo, Si, or B.

In some embodiments, the positive electrode material contains element Zr and element B, and a mass percentage of element Zr in the positive electrode material is greater than or equal to that of element B. In some embodiments, a coating weight of the positive electrode active substance layer ranges from 0.78 g/m² to 1.62 g/m², and a compacted density of the positive electrode active substance layer ranges from 3.1 g/cm³ to 3.55 g/cm³. In some embodiments, elongation of the positive electrode material is less than or equal to 1%.

In some embodiments, the positive electrode material includes primary particles and secondary particles, where $D_v50$ of the secondary particles is greater than 1.5 times $D_v50$ of the primary particles; a full width at half maximum FWHM1 of a diffraction peak of plane (003) in an X-ray diffraction spectrum of the secondary particles satisfies 0.140°≤FWHM1≤0.25°; and a full width at half maximum FWHM2 of a diffraction peak of plane (003) in an X-ray diffraction spectrum of the primary particles satisfies 0.12°≤FWHM2≤0.19°.

In some embodiments, the positive electrode material includes primary particles, where an average particle size of the primary particles ranges from 1.5 μm to 2.5 μm.

This application proposes an electrochemical apparatus in some embodiments, including the positive electrode according to any one of the foregoing embodiments, a negative electrode, and a separator, where the separator is located between the positive electrode and the negative electrode.

In some embodiments, the N-th cycle is present during cycling of the electrochemical apparatus at 45°C, where N>400, a capacity retention rate P(N-3) after the (N-3)-th cycle and a capacity retention rate P(N+3) after the (N+3)-th cycle satisfy P(N-3)-P(N+3)>10%, and a volume swelling rate of the electrochemical apparatus after the N-th cycle is less than 10%.

In some embodiments, the electrochemical apparatus further includes an electrolyte; the electrolyte includes a multi-nitrile compound, where the multi-nitrile compound includes at least one of 1,3,6-hexanetricarbonitrile, 1,2,6-hexanetricarbonitrile, 1,3,5-pentanetricarbonitrile, 1,2,3-tris(2-cyanoethoxy)propane, succinonitrile, or adiponitrile, where a mass ratio of the positive electrode material to the multi-nitrile compound is 1:(0.001 to 0.005).

This application proposes an electronic apparatus in some embodiments, including the electrochemical apparatus according to any one of the foregoing embodiments.

According to the positive electrode proposed in some embodiments of this application, when a mass percentage of element Li of the positive electrode in the positive electrode active substance layer as tested using an inductively coupled plasma spectrometer (ICP) ranges from 1.45% to 1.55%, an integral intensity of $CO_2$ obtained by testing the positive electrode using a differential electrochemical mass spectrometry (DEMS) is Q≤2000 nmol/mg. The positive electrode generates a small amount of $CO_2$ in a highly delithiated state, indicating that the positive electrode material has a stable structure, a crystal structure of the positive electrode material can be maintained during delithiation, and a small amount of oxygen is released, and therefore better high-temperature cycling performance and safety performance are obtained.

**DESCRIPTION OF EMBODIMENTS**

The following embodiments may enable those skilled in the art to understand this application more comprehensively, but do not limit this application in any way.

Electrochemical apparatuses (for example, lithium-ion batteries) are widely used in various fields. In related technologies, under high temperature, an electrochemical apparatus has reduced cycling performance and is prone to produce gas, causing reduced safety performance.

To enhance high-temperature cycling performance and reduce gas production at high temperature, in some related technologies, a positive electrode material with morphology of secondary particles is used; and the secondary particles are formed by agglomerating nanoscale primary particles, which have good rate performance, and can reduce interface side reactions between the positive electrode material and an electrolyte and suppress dissolution of metal elements in the positive electrode material with combination of doping and surface coating, thereby improving high-temperature cycling performance and reducing gas production at high temperature to some extent. In other related technologies, a positive electrode material with morphology of primary particles is used, which has a large average particle size of the primary particles and low residual Li on a surface; and surfaces of the primary particles have better surface coating, and less interaction stress is generated between the particles during charging and discharging, thereby obtaining better high-temperature cycling performance.

However, for the positive electrode material with the morphology of the secondary particles, interaction stress is generated between the primary particles due to lattice expansion and lattice contraction during charging and discharging of the positive electrode material, which causes the particles to be broken; and in addition, the primary particles in the secondary particles cannot be well coated. These problems will exacerbate side reactions between the positive electrode material and the electrolyte, resulting in degradation of performance and increase of gas production. For the positive electrode material with the morphology of the primary particles, the large average particle size of the primary particles in the positive electrode material is not conducive to migration of lithium ions, with low high-rate discharge capacity retention rate, high temperature rise, and poor high-rate high-temperature cycling performance.

This application proposes a positive electrode in some embodiments. The positive electrode may be a positive electrode of an electrochemical apparatus, where the positive electrode includes a positive electrode current collector and a positive electrode active substance layer; for example, the positive electrode current collector may be an aluminum foil or a copper foil; the positive electrode active substance layer is located in at least partial region of one surface or two surfaces of the positive electrode current collector; the positive electrode active substance layer may include a positive electrode material; the positive electrode material may include one or two of cobalt lithium manganate or nickel cobalt lithium aluminate; the positive electrode material includes element Li; and when a mass percentage of element Li of the positive electrode in the positive electrode active substance layer as tested using an inductively coupled plasma spectrometer (ICP) ranges from 1.45% to 1.55%, an integral intensity of $CO_2$ obtained by testing the positive electrode using a differential electrochemical mass spectrometry (DEMS) is Q≤2000 nmol/mg.

The following describes a principle and method for testing a positive electrode using a differential electrochemical mass spectrometry (DEMS) in some embodiments as an example. Basic principle: An electrochemical workstation including an in-situ battery is combined with a mass spectrometry test system, a pressure difference is produced by a vacuum system, a gas product of the battery is delivered into a tester, and on-line testing of gas production of the battery during working under different conditions is implemented. Test method: For a positive electrode under test, an amount of deintercalated lithium is adjusted at a current of 0.1C until a mass percentage of element Li of the positive electrode in the positive electrode active substance layer as tested using an inductively coupled plasma spectrometer (ICP) ranges from 1.45% to 1.55%. Then the positive electrode is soaked in a dimethyl carbonate (DMC) solution for 24 hours and dried in vacuum, and the dried positive electrode is assembled in the in-situ battery. The electrolyte is composed of 30% ethylene carbonate (EC) and 70% diethyl carbonate (DEC) (percentage by mass) with 1 mol/L $LiPF_6$, an amount of electrolyte added ranges from 3 g/Ah to 4 g/Ah; then ambient temperature of the battery is adjusted to 85°C and the battery is stored, in addition, $CO_2$ gas signals are detected in real time in a time period ranging from 0 second to 500000 seconds, and integral intensity Q of $CO_2$ is obtained.

The following describes a principle and method for testing a positive electrode by using an inductively coupled plasma spectrometer (ICP) in some embodiments as an example. Basic principle: Qualitative and quantitative analyses are performed according to characteristic spectral lines emitted by atoms or ions of different elements under thermal excitation. Different energy level structures of atoms of elements under test lead to different characteristics of emitted spectral lines; based on this, qualitative analysis can be performed; and different concentrations of atoms of the elements under test lead to different emission intensities, so that quantitative determination of the elements can be implemented. Test method: Six parallel samples of electrode plates under test are taken and then separately weighed, digested, and diluted; then mass percentages of element Li are tested using a Thermo ICAP6300 inductively coupled plasma emission spectrometer and averaged, where the mass percentages of element Li are mass percentages of element Li in active materials of the electrode plates with substrates removed.

In some embodiments of this application, when a mass percentage of element Li of the positive electrode in the positive electrode active substance layer as tested using an inductively coupled plasma spectrometer (ICP) ranges from 1.45% to 1.55%, an integral intensity of $CO_2$ obtained by testing the positive electrode using a differential electrochemical mass spectrometry (DEMS) is Q≤2000 nmol/mg. The positive electrode generates a small amount of $CO_2$ in a highly delithiated state, indicating that the positive electrode material has a stable structure, an initial structure of the positive electrode material can be maintained during delithiation, and a small amount of oxygen is released, and therefore better cycling performance, safety and reliability are obtained.

In some embodiments of this application, the positive electrode material includes $LiNi_xCo_yM1_{1-x-y-z}M2_zO_2$, where 0.5≤x<1, 0≤y<0.5, and 0≤z≤0.005; M1 includes at least one of Mn or Al; and M2 includes at least one of Mg, Ti, Zr, Ce, Sr, Y, Hf, Ba, Nb, V, Al, Ge, Sn, W, Mo, Si, or B. In some embodiments, element Al can stabilize oxygen in the positive electrode material and reduce gas production at high temperature.

In some embodiments of this application, the positive electrode material includes primary particles and secondary particles, where $D_v50$ of the secondary particles is greater than 1.5 times $D_v50$ of the primary particles; a full width at half maximum FWHM1 of a diffraction peak of plane (003) in an X-ray diffraction spectrum of the secondary particles satisfies 0.140°≤FWHM1≤0.25°; and a full width at half maximum FWHM2 of a diffraction peak of plane (003) in an X-ray diffraction spectrum of the primary particles satisfies 0.12°≤FWHM2≤0.19°. In some embodiments, the secondary particles with polycrystalline morphology in the positive electrode material help enhance rate performance of the positive electrode material. The primary particles with monocrystalline morphology in the positive electrode material help enhance cycling performance of the positive electrode material. The positive electrode material includes both the primary particles and the secondary particles to have both rate performance and cycling performance. Test method of $D_v50$ of primary particles and $D_v50$ of secondary particles: In a dry room with a relative humidity of 2%, part of a positive electrode material is taken and uniformly dispersed in an NMP solution, followed by performing ultrasonic dispersion for 12 hours and uniformly stirring to obtain a suspension containing the positive electrode material; the suspension is stirred and slowly poured onto a 1500-mesh screen simultaneously; part of small particles enter filtrate through the screen, and then the filtrate is left standing for 24 hours, followed by pouring off supernatant and drying to obtain powder as primary particles; another part of large particles are left on the screen, followed by drying to obtain powder as secondary particles.

In some embodiments of this application, the positive electrode material includes primary particles, where an average particle size of the primary particles ranges from 1.5 μm to 2.5 μm. In some embodiments, if the primary particles are spherical, the average particle size of the primary particles is an average diameter of the particles; and if the primary particles are nonspherical, the average particle size of the primary particles is a length of the longest axis of the particles. The particle size of the primary particles may be observed and measured with a scanning electron microscope (SEM); particle sizes of more than 50 primary particles are counted and averaged; and a resulting average of the particle sizes is the average particle size of the primary particles of the positive electrode material. In some embodiments, the average particle size of the primary particles being less than 1.5 μm may be because an excessively large contact surface of the primary particles with the electrolyte leads to increase of consumption of the electrolyte and increase of side reactions. The average particle size of the primary particles being greater than 2.5 μm may not be conducive to migration of lithium ions, thereby reducing rate performance. In some embodiments, the positive electrode material uses the primary particles.

In some embodiments of this application, the positive electrode material contains element Zr and element B, and a mass percentage of element Zr in the positive electrode material is greater than or equal to that of element B. In some embodiments, element Zr helps enhance structural stability of the positive electrode material, thereby enhancing cycling performance and safety performance. Element B helps improve residual lithium on a surface of the positive electrode material. However, an excessively high mass percentage of element B may cause reduction in dynamics performance.

In some embodiments of this application, a coating weight of the positive electrode active substance layer ranges from 0.78 g/m² to 1.62 g/m², and a compacted density of the positive electrode active substance layer ranges from 3.1 g/cm³ to 3.55 g/cm³. In some embodiments, the coating weight is a ratio of a mass of the positive electrode active substance layer to a coating area. The coating weight of the positive electrode active substance layer being less than 0.78 g/m² may be because the positive electrode active substance layer loaded on the positive electrode current collector is excessively thin, reducing volumetric energy density. When the coating weight of the positive electrode active substance layer is greater than 1.62 g/m², the positive electrode active substance layer loaded on the positive electrode current collector is excessively thick, causing deterioration in infiltration and migration of the electrolyte, thereby reducing conductivity. In some embodiments, the compacted density being less than 3.1 g/cm³ may not help increase the volumetric energy density and cause increase of internal resistance. The compacted density being greater than 3.55 g/cm³ may cause breakage of the positive electrode due to excessively high pressure, which is not conducive to cycling performance.

In some embodiments of this application, elongation of the positive electrode material is less than or equal to 1%. In some embodiments, the elongation of the positive electrode material being greater than 1% may cause breakage of more positive electrode materials, leading to more gas produced during charging and discharging, lower strength of the positive electrode current collector, and lower machinability. The elongation of the positive electrode material is obtained by using the following method: A fully discharged cell is disassembled to obtain a fully discharged positive electrode; then the fully discharged positive electrode is soaked in a DMC solvent for 48 hours, followed by washing, drying, scraping for powder, and sintering at 500°C in an oxygen atmosphere for about 6 hours to remove a conductive agent and a binder, to obtain a positive electrode material. The positive electrode material, acetylene black (conductive agent), and polyvinylidene fluoride (binder) are uniformly mixed at a ratio of 96.0:2.0:2.0, an appropriate amount of N-methylpyrrolidone (NMP) is added, then the resulting mixture is fully stirred to prepare a uniform slurry. The slurry is applied on a 10 $\mu$m Al foil (current collector) at a surface density of 90 g/m$^2$, followed by drying. An electrode plate with a length of 1 m is taken and cold pressed by controlling a cold pressing compacted density to be 3.5 g/m$^3$ to obtain a cold pressed electrode plate with a length of L, where the elongation of the positive electrode material is (L-1)/1.

This application proposes an electrochemical apparatus in some embodiments, including the positive electrode according to any one of the foregoing embodiments, a negative electrode, and a separator, where the separator is located between the positive electrode and the negative electrode.

In some embodiments, the N-th cycle is present during cycling of the electrochemical apparatus at 45°C, where N>400, a capacity retention rate P(N-3) after the (N-3)-th cycle and a capacity retention rate P(N+3) after the (N+3)-th cycle satisfy P(N-3)-P(N+3)>10%, and a volume swelling rate of the electrochemical apparatus after the N-th cycle is less than 10%. In some embodiments, functional failure occurs when a cycle life of the positive electrode material comes into the end. A significant reduction in a cycling capacity retention rate results in P(N-3)-P(N+3)>10%; however, the volume swelling rate of the electrochemical apparatus after the N-th cycle is still less than 10%. This indicates that the electrochemical apparatus has less gas production and good safety performance in this case.

In some embodiments, the negative electrode includes a negative electrode current collector and a negative electrode active substance layer. The negative electrode current collector may use at least one of copper foil, nickel foil, or carbon-based current collector. In some embodiments, the negative electrode active substance layer may further include a conductive agent. The conductive agent may include at least one of conductive carbon black, Ketjen black, laminated graphite, graphene, carbon nanotubes, or carbon fiber. In some embodiments, the negative electrode active substance layer includes a negative electrode material. For example, the negative electrode material may include at least one of artificial graphite, natural graphite, mesocarbon microbeads, hard carbon, or silicon-containing material.

In some embodiments, the separator includes at least one of polyethylene, polypropylene, polyvinylidene fluoride, polyethylene terephthalate, polyimide, or aramid. For example, polyethylene includes at least one of high-density polyethylene, low-density polyethylene, or ultra-high-molecular-weight polyethylene. Particularly, polyethylene and polypropylene have a good effect on preventing short circuits, and can improve stability of a battery through a shutdown effect. In some embodiments, the separator has a thickness ranging from about 5 $\mu$m to 500 $\mu$m.

In some embodiments, a surface of the separator may further include a porous layer. The porous layer is disposed on at least one surface of a substrate of the separator and includes inorganic particles and a binder, where the inorganic particles are selected from at least one of aluminum oxide ($Al_2O_3$), silicon dioxide ($SiO_2$), magnesium oxide (MgO), titanium oxide ($TiO_2$), hafnium dioxide ($HfO_2$), stannic oxide ($SnO_2$), cerium dioxide ($CeO_2$), nickel oxide (NiO), zinc oxide (ZnO), calcium oxide (CaO), zirconium dioxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, pores of the separator have a diameter ranging from about 0.01 $\mu$m to 1 $\mu$m. The binder of the porous layer is selected from at least one of polyvinylidene fluoride, vinylidene fluoride-hexafluoropropylene copolymer, polyamide, polyacrylonitrile, polyacrylate, polyacrylic acid, polyacrylate, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrochemical apparatus is a wound or stacked electrochemical apparatus. In some embodiments, the electrochemical apparatus includes a lithium-ion battery. However, this application is not limited thereto.

In some embodiments, the electrochemical apparatus further includes an electrolyte; the electrolyte includes a multi-nitrile compound, where the multi-nitrile compound includes at least one of 1,3,6-hexanetricarbonitrile, 1,2,6-hexanetricarbonitrile, 1,3,5-pentanetricarbonitrile, 1,2,3-tris(2-cyanoethoxy)propane, succinonitrile, or adiponitrile, where a mass ratio of the positive electrode material to the multi-nitrile compound is 1:(0.001 to 0.005).

In some embodiments, the electrolyte includes a lithium salt and a non-aqueous solvent. The lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. For example, $LiPF_6$ is selected as the lithium salt because it can provide a high ionic conductivity and improve cycling performance.

The non-aqueous solvent may be a carbonate compound, a carboxylate compound, an ether compound, another organic solvent, or a combination thereof. The carbonate compound may be a linear carbonate compound, a cyclic carbonate compound, a fluorocarbonate compound, or a combination thereof. An example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. The fluorocarbonate compound includes fluoroethylene carbonate (FEC). An example of the carboxylate compound is methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or a combination thereof. An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof. An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments of this application, a lithium-ion battery is used as an example. A positive electrode, a separator, and a negative electrode are wound or stacked in sequence to form an electrode assembly, and the electrode assembly is then packaged in an aluminum-plastic film, followed by injection of an electrolyte, formation, and packaging, to prepare the lithium-ion battery. Then, a performance test is performed on the prepared lithium-ion battery.

Those skilled in the art will understand that the method for preparing the electrochemical apparatus (for example, the lithium-ion battery) described above is only an embodiment. Without departing from the content disclosed in this application, other methods commonly used in the art may be used.

Embodiments of this application further provide an electronic apparatus, including the foregoing electrochemical apparatus. The electronic apparatus according to the embodiments of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and the like.

Some specific examples and comparative examples are listed below to better illustrate this application. Lithium-ion batteries are used as examples.

Example 1:

Preparation of positive electrode: A nickel cobalt lithium manganate precursor and lithium hydroxide (LiOH) were prepared according to a stoichiometric ratio of $LiNi_{0.83}Co_{0.12}Mn_{0.05}O_2$, then mixed uniformly and dried; then the dried mixture was subjected to one-time calcination (sintering) at 820°C for 15 hours, followed by cooling at a rate of 5°C/min to obtain a finished product; and $D_v50$ of particles of a positive electrode material was controlled to be 3.5 μm. An average particle size of primary particles of the positive electrode material was 1.8 μm. The prepared positive electrode material, acetylene black, and polyvinylidene fluoride were mixed at a given ratio, N-methylpyrrolidone was added, then the resulting mixture was fully stirred to prepare a uniform slurry, and the slurry was applied on an Al foil (positive electrode current collector), followed by drying and cold pressing to obtain a positive electrode. A coating weight of the positive electrode active substance layer in the positive electrode was 1.2 g/m$^2$, and a compacted density of the positive electrode active substance layer was 3.5 g/cm$^3$. When a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1800 nmol/mg.

Preparation of negative electrode: Artificial graphite, acetylene black, styrene-butadiene rubber, and sodium carboxymethyl cellulose were uniformly mixed at a weight ratio of 95:2:2:1, and deionized water was added, followed by fully stirring to prepare a uniform slurry; and the slurry was applied on a Cu foil (negative electrode current collector), followed by drying and cold pressing, to obtain a negative electrode.

Preparation of separator: A porous polyethylene (PE) film was used as a separator.

Preparation of lithium-ion battery: The positive electrode, the separator, and the negative electrode were stacked in sequence, so that the separator was disposed between the positive electrode and the negative electrode for separation, followed by winding to obtain an electrode assembly. The electrode assembly was placed in an outer packaging aluminum-plastic film and dehydrated at 80°C, and then the electrolyte was injected and packaged, followed by processes such as formation, degassing, and trimming to obtain a lithium-ion battery.

Example 2:

Example 2 had the same steps as Example 1, except for the steps for preparing the positive electrode.

Preparation of positive electrode: A nickel cobalt lithium manganate precursor and lithium carbonate ($Li_2CO_3$) were prepared according to a stoichiometric ratio of $LiNi_{0.5}Co_{0.2}Mn_{0.3}O_2$, then mixed uniformly and dried; then the dried mixture was subjected to one-time calcination at 910°C for 15 hours, followed by cooling at a rate of 5°C/min to obtain a finished product; and $D_v50$ of particles of a positive electrode material was controlled to be 3.5 $\mu$m. An average particle size of primary particles of the positive electrode material was 1.8 $\mu$m. The prepared positive electrode material, acetylene black, and polyvinylidene fluoride were mixed at a given ratio, N-methylpyrrolidone was added, then the resulting mixture was fully stirred to prepare a uniform slurry, and the slurry was applied on an Al foil (positive electrode current collector), followed by drying and cold pressing to obtain a positive electrode. A coating weight of the positive electrode active substance layer was set as 1.2 g/m$^2$, and a compacted density of the positive electrode active substance layer was controlled to be 3.5 g/cm$^3$. When a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1200 nmol/mg.

Example 3:

Example 3 had the same steps as Example 1, except for the steps for preparing the positive electrode.

Preparation of positive electrode: A nickel cobalt lithium aluminate precursor and lithium hydroxide (LiOH) were prepared according to a stoichiometric ratio of $LiNi_{0.83}Co_{0.12}Al_{0.05}O_2$, then mixed uniformly and dried; then the dried mixture was subjected to one-time calcination at 820°C for 15 hours, followed by cooling at a rate of 5°C/min to obtain a finished product; and $D_v50$ of particles of a positive electrode material was controlled to be 3.5 $\mu$m. An average particle size of primary particles of the positive electrode material was 1.8 $\mu$m. A coating weight of the positive electrode active substance layer was set as 1.2 g/m$^2$, and a compacted density of the positive electrode active substance layer was controlled to be 3.5 g/cm$^3$. The prepared positive electrode material, acetylene black, and polyvinylidene fluoride were mixed at a given ratio, N-methylpyrrolidone was added, then the resulting mixture was fully stirred to prepare a uniform slurry, and the slurry was applied on an Al foil (positive electrode current collector), followed by drying and cold pressing to obtain a positive electrode. When a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1700 nmol/mg.

Example 4:

Example 4 had the same steps as Example 1, except for the steps for preparing the positive electrode.

Preparation of positive electrode: A nickel cobalt lithium manganate precursor and lithium hydroxide (LiOH) were prepared according to a stoichiometric ratio of $LiNi_{0.88}Co_{0.07}Mn_{0.05}O_2$, then mixed uniformly and dried; then the dried mixture was subjected to one-time calcination at 800°C for 15 hours, followed by cooling at a rate of 5°C/min to obtain a finished product; and $D_v50$ of particles of a positive electrode material was controlled to be 3.5 $\mu$m. An average particle size of primary particles of the positive electrode material was 1.8 $\mu$m. The prepared positive electrode material, acetylene black, and polyvinylidene fluoride were mixed at a given ratio, N-methylpyrrolidone was added, then the resulting mixture was fully stirred to prepare a uniform slurry, and the slurry was applied on an Al foil (positive electrode current collector), followed by drying and cold pressing to obtain a positive electrode. A coating weight of the positive electrode active substance layer in the positive electrode was set as 1.2 g/m$^2$, and a compacted density of the positive electrode active substance layer was controlled to be 3.5 g/cm$^3$. When a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=2000 nmol/mg.

Example 5:

The positive electrode of Example 5 was prepared in the same method as that of Example 1, except that the cooling speed after one-time sintering was controlled so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=2000 nmol/mg.

Example 6:

Example 6 had the same steps as Example 1, except that the cooling speed after one-time sintering was controlled so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1500 nmol/mg.

Example 7:

Example 7 had the same steps as Example 1, except that the cooling speed after one-time sintering was controlled so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1200 nmol/mg.

Example 8:

Example 8 had the same steps as Example 1, except for the steps for preparing the positive electrode.
Preparation of positive electrode: A nickel cobalt lithium manganate precursor, lithium hydroxide (LiOH), and zirconium dioxide ($ZrO_2$) were prepared according to a stoichiometric ratio of $LiNi_{0.83}Co_{0.12}Mn_{0.047}Zr_{0.003}O_2$, then mixed uniformly and dried; then the dried mixture was subjected to one-time calcination at 820°C for 15 hours, followed by cooling at a rate of 5°C/min to obtain a finished product; and $D_v50$ of particles of a positive electrode material was controlled to be 3.5 $\mu$m. The prepared positive electrode material, acetylene black, and polyvinylidene fluoride were mixed at a given ratio, N-methylpyrrolidone was added, then the resulting mixture was fully stirred to prepare a uniform slurry, and the slurry was applied on an Al foil (positive electrode current collector), followed by drying and cold pressing to obtain a positive electrode. An average particle size of primary particles of the positive electrode material was 1.8 $\mu$m. A coating weight of the positive electrode active substance layer was set as 1.2 $g/m^2$, and a compacted density of the positive electrode active substance layer was controlled to be 3.5 $g/cm^3$. When a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1000 nmol/mg.

Example 9:

Example 9 had the same steps as Example 1, except for the steps for preparing the positive electrode.
Preparation of positive electrode: A nickel cobalt lithium manganate precursor and lithium hydroxide (LiOH), and aluminum oxide ($Al_2O_3$) were prepared according to a stoichiometric ratio of $LiNi_{0.83}Co_{0.12}Mn_{0.047}Al_{0.003}O_2$, then mixed uniformly and dried; then the dried mixture was subjected to one-time calcination at 820°C for 15 hours, followed by cooling at a rate of 5°C/min to obtain a finished product; and $D_v50$ of particles of a positive electrode material was controlled to be 3.5 $\mu$m. An average particle size of primary particles of the positive electrode material was 1.8 $\mu$m. The prepared positive electrode material, acetylene black, and polyvinylidene fluoride were mixed at a given ratio, N-methylpyrrolidone was added, then the resulting mixture was fully stirred to prepare a uniform slurry, and the slurry was applied on an Al foil (positive electrode current collector), followed by drying and cold pressing to obtain a positive electrode. A coating weight of the positive electrode active substance layer was set as 1.2 $g/m^2$, and a compacted density of the positive electrode active substance layer was controlled to be 3.5 $g/cm^3$. When a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1000 nmol/mg.

Example 10:

Example 10 had the same steps as Example 1, except for the steps for preparing the positive electrode.
Preparation of positive electrode: A nickel cobalt lithium manganate precursor, lithium hydroxide (LiOH), and strontium oxide (SrO) were prepared according to a stoichiometric ratio of $LiNi_{0.83}Co_{0.12}Mn_{0.047}Sr_{0.003}O_2$, then mixed uniformly and dried; then the dried mixture was subjected to one-time calcination at 820°C for 15 hours, followed by cooling at a rate of 5°C/min, to enable oxygen and transition metal on surfaces of particles of a material to satisfy a specified condition and obtain a finished product; and $D_v50$ of particles of a positive electrode material was controlled to be 3.5 $\mu$m. An average particle size of primary particles of the positive electrode material was 1.8 $\mu$m. The prepared positive electrode material, acetylene black, and polyvinylidene fluoride were mixed at a given ratio, N-methylpyrrolidone was added, then the resulting mixture was fully stirred to prepare a uniform slurry, and the slurry was applied on an Al foil (positive electrode current collector), followed by drying and cold pressing to obtain a positive electrode. A coating weight of the positive electrode active substance layer was set as 1.2 $g/m^2$, and a compacted density of the positive electrode active substance layer was controlled to be 3.5 $g/cm^3$. When a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1100 nmol/mg.

Example 11:

Example 11 had the same steps as Example 1, except for the steps for preparing the positive electrode.
Preparation of positive electrode: A nickel cobalt lithium manganate precursor, lithium hydroxide (LiOH), and tungsten oxide ($WO_3$) were prepared according to a stoichiometric ratio of $LiNi_{0.83}Co_{0.12}Mn_{0.047}W_{0.003}O_2$, then mixed uniformly and dried; then the dried mixture was subjected to one-time calcination at 820°C for 15 hours, followed by cooling at a rate of 5°C/min to obtain a finished product; and $D_v50$ of particles of a positive electrode material was controlled to be 3.5 $\mu$m. An average particle size of primary particles of the positive electrode material was 1.8 $\mu$m. The prepared positive electrode material, acetylene black, and polyvinylidene fluoride were mixed at a given ratio, N-methylpyrrolidone was added, then the resulting mixture was fully stirred to prepare a uniform slurry, and the slurry was applied on an Al foil (positive electrode current collector), followed by drying and cold pressing to obtain a positive electrode. A coating weight of the positive electrode active substance layer was set as 1.2 $g/m^2$, and a compacted density of the positive electrode active substance layer was controlled to be 3.5 $g/cm^3$. When a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=900 nmol/mg.

Example 12:

Example 12 had the same steps as Example 8, except that a doping amount of Zr was controlled to be 1000 ppm so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1080 nmol/mg.

Example 13:

Example 13 had the same steps as Example 8, except that a doping amount of Zr was controlled to be 5000 ppm so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=910 nmol/mg.

Example 14:

Example 14 had the same steps as Example 1, except for the steps for preparing the positive electrode.
Preparation of positive electrode: A nickel cobalt lithium manganate precursor, lithium hydroxide (LiOH), and zirconium oxide ($ZrO_2$) were prepared according to a stoichiometric ratio of $LiNi_{0.83}Co_{0.12}Mn_{0.047}Zr_{0.003}O_2$, then mixed uniformly and dried; then the dried mixture was subjected to one-time calcination at 820°C for 15 hours, followed by cooling at a rate of 5°C/min to obtain a half-finished product; and $D_v50$ of particles of a positive electrode material was controlled to be 3.5 $\mu$m. The half-finished product was uniformly mixed with boric acid ($H_3BO_3$), and the resulting mixture was sintered at 400°C for 4 hours for performing boron coating, where an amount of boron is 400 ppm, and a finished product of a positive electrode material was obtained. The prepared positive electrode material, acetylene black, and polyvinylidene fluoride were mixed at a given ratio, N-methylpyrrolidone was added, then the resulting mixture was fully stirred to prepare a uniform slurry, and the slurry was applied on an Al foil (positive electrode current collector), followed by drying and cold pressing to obtain a positive electrode. An average particle size of primary particles of the positive electrode material was 1.8 $\mu$m. A coating weight of the positive electrode active substance layer was set as 1.2 $g/m^2$, and a compacted density of the positive electrode active substance layer was controlled to be 3.5 $g/cm^3$. When a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=800 nmol/mg.

Example 15:

Example 15 had the same steps as Example 14, except that the coating amount of element B was controlled to be 800 ppm so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=900 nmol/mg.

Example 16:

Example 16 had the same steps as Example 8, except that the sintering temperature was controlled so that an average particle size of primary particles of a material was 1.5 $\mu$m, and when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1150 nmol/mg.

Example 17:

Example 17 had the same steps as Example 8, except that the sintering temperature was controlled, so that an average particle size of primary particles of a material was 2.5 $\mu$m, and when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=830 nmol/mg.

Example 18:

A nickel cobalt lithium manganate precursor and lithium hydroxide (LiOH) were prepared according to a stoichiometric ratio of $LiNi_{0.83}Co_{0.12}Mn_{0.05}O_2$, then mixed uniformly and dried; then the dried mixture was subjected to one-time calcination at 780°C for 16 hours, followed by cooling at a rate of 5°C/min to obtain secondary particles. $D_v50$ of the secondary particles was controlled to be 10 $\mu$m. A full width at half maximum FWHM1 of a diffraction peak of plane (003) in an X-ray diffraction spectrum of the prepared secondary particles was 0.19°.

A nickel cobalt lithium manganate precursor and lithium hydroxide (LiOH) were prepared according to a stoichiometric ratio of $LiNi_{0.83}Co_{0.12}Mn_{0.05}O_2$, then mixed uniformly and dried; then the dried mixture was subjected to one-time calcination at 820°C for 15 hours, followed by cooling at a rate of 5°C/min to obtain primary particles. $D_v50$ of the primary particles was controlled to be 3.5 $\mu$m. A full width at half maximum FWHM1 of a diffraction peak of plane (003) in an X-ray diffraction spectrum of the prepared primary particles was 0.15°.

The primary particles and the secondary particles included in the prepared positive electrode material were mixed with acetylene black and polyvinylidene fluoride at a given ratio, N-methylpyrrolidone was added, then the resulting mixture was fully stirred to prepare a uniform slurry, and the slurry was applied on an Al foil (positive electrode current collector), followed by drying and cold pressing to obtain a positive electrode. A coating weight of the positive electrode active substance layer was 1.2 $g/m^2$, and a compacted density of the positive electrode active substance layer was 3.5 $g/cm^3$. When a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1400 nmol/mg.

Preparation of negative electrode: Artificial graphite, acetylene black, styrene-butadiene rubber, and sodium carboxymethyl cellulose were uniformly mixed at a weight ratio of 95:2:2:1, and deionized water was added, followed by fully stirring to prepare a uniform slurry; and the slurry was applied on a Cu foil (negative electrode current collector), followed by drying and cold pressing, to obtain a negative electrode.

Preparation of separator: A porous polyethylene (PE) film was used as a separator.

Preparation of lithium-ion battery: The positive electrode, the separator, and the negative electrode were stacked in sequence, so that the separator was disposed between the positive electrode and the negative electrode for separation, followed by winding to obtain an electrode assembly. The electrode assembly was placed in an outer packaging aluminum-plastic film and dehydrated at 80°C, and then the electrolyte was injected and packaged, followed by processes such as formation, degassing, and trimming to obtain a lithium-ion battery.

Example 19:

Example 19 had the same steps as Example 18, except that the particle size, sintering temperature, and sintering duration of the nickel cobalt lithium manganate precursor were controlled so that $D_v50$ of secondary particles was 8 $\mu$m, a full width at half maximum FWHM1 of a diffraction peak of plane (003) in an X-ray diffraction spectrum was 0.20°, and when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1500 nmol/mg.

Example 20:

Example 20 had the same steps as Example 8, except that the coating weight of the positive electrode active substance layer was controlled to be 0.78 g/m$^2$ so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1000 nmol/mg.

Example 21:

Example 21 had the same steps as Example 8, except that the coating weight of the positive electrode active substance layer was controlled to be 1.62 g/m$^2$ so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1000 nmol/mg.

Example 22:

Example 22 had the same steps as Example 8, except that the compacted density of the positive electrode was controlled to be 3.1 g/cm$^3$ so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=910 nmol/mg.

Example 23:

Example 23 had the same steps as Example 8, except that the compacted density of the positive electrode was controlled to be 3.55 g/cm$^3$ so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=1150 nmol/mg.

Example 24:

Example 24 had the same steps as Example 8, except that the positive electrode material in the electrolyte used in Example 24 included 0.001 g 1,3,6-hexanetricarbonitrile per gram, so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=950 nmol/mg.

Example 25:

Example 25 had the same steps as Example 8, except that the positive electrode material in the electrolyte used in Example 25 included 0.003 g 1,3,6-hexanetricarbonitrile per gram, so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=890 nmol/mg.

Example 26:

Example 26 had the same steps as Example 8, except that the positive electrode material in the electrolyte used in Example 26 included 0.005 g 1,3,6-hexanetricarbonitrile per gram, so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=800 nmol/mg.

Comparative Example 1:

Comparative Example 1 had the same steps as Example 1, except that the cooling speed after one-time sintering was controlled so that when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=3000 nmol/mg.

Comparative Example 2:

Comparative Example 2 had the same steps as Example 25, except that the particle size, sintering temperature, and sintering duration of the nickel cobalt lithium manganate precursor were controlled so that $D_v50$ of secondary particles was 5 $\mu$m, a full width at half maximum FWHM1 of a diffraction peak of plane (003) in an X-ray diffraction spectrum was 0.21°, and when a mass percentage of element Li of the positive electrode in the positive electrode active substance layer as tested using an inductively coupled plasma spectrometer (ICP) ranged from 1.45% to 1.55%, an integral intensity of $CO_2$ obtained by testing using a differential electrochemical mass spectrometry (DEMS) was Q=2200 nmol/mg.
The following describes methods for testing various parameters in this application.

1. Differential electrochemical mass spectrometry (DEMS) test

Basic principle: An electrochemical workstation including an in-situ battery was combined with a mass spectrometry test system, a pressure difference was produced by a vacuum system, a gas product of the battery was delivered into a tester, and on-line testing of gas production of the battery during working under different conditions was implemented.
Sample pretreatment method: For a positive electrode obtained by dissembling a cell, an amount of deintercalated lithium of an electrode plate was adjusted at a low current of 0.1C, so that a mass percentage of element Li of the positive electrode in a positive electrode active substance layer as tested using an inductively coupled plasma spectrometer (ICP) ranged from 1.45% to 1.55%; and then the positive electrode was soaked in a DMC solution for 24 hours, followed by vacuum drying and sealing for later use.
Working condition of battery in DEMS test: The treated positive electrode was assembled in the in-situ battery of the DEMS test system. Components of an electrolyte included 30% of ethylene carbonate (EC) and 70% of diethyl carbonate (DEC) (percentage by mass) and 1 mol/L of $LiPF_6$, an amount of the electrolyte added ranged from 3 g/Ah to 4 g/Ah; then ambient temperature of the battery was adjusted to 85°C and the battery was stored, in addition, $CO_2$ gas signals were detected in real time in a time period ranging from 0 second to 500000 seconds.

2. Inductively coupled plasma spectrometer (ICP) test

Basic principle: Qualitative and quantitative analyses were performed according to characteristic spectral lines emitted by atoms or ions of different elements under thermal excitation. Different energy level structures of atoms of elements under test led to different characteristics of emitted spectral lines; based on this, qualitative analysis could be performed; and different concentrations of atoms of the elements under test led to different emission intensities, so that quantitative determination of the elements could be implemented.
Test method: Six parallel samples of electrode plates under test were taken and then separately weighed, digested, and diluted; then mass percentages of element Li were tested using a Thermo ICAP6300 inductively coupled plasma emission spectrometer and averaged, where the mass percentages of element Li were mass percentages of element Li in active materials of the electrode plates with substrates removed.

3. Capacity test

Four lithium-ion batteries in each group of lithium-ion batteries in the examples and comparative examples were taken. In an environment at about 25°C, constant-current and constant-voltage charging was performed at a charge current of 0.5C (that is, a current value at which a theoretical capacity was completely discharged within 2 hours) until an upper-limit voltage was about 4.2 V, and then constant-current discharging was performed at a discharge current of 0.2C until a final voltage was about 2.8 V, and first discharge capacities were calculated as capacities of the batteries.

4. Cycling performance and cycling gas production test

Four lithium-ion batteries in each group of lithium-ion batteries in the examples and comparative examples were taken, then the lithium-ion batteries were charged and discharged repeatedly in the following steps, and discharge capacity retention rates of the lithium-ion batteries were calculated.
First charging and discharging was performed for the first time in an environment at about 45°C, and constant-current and constant-voltage charging was performed at a charge current of 2C until an upper-limit voltage was about 4.2 V; then constant-current discharging was performed at a discharge current of 6C until a final voltage was about 2.8 V, and a discharge capacity of the first cycle and a thickness (initial thickness) at that point were recorded; and then charging and discharging was performed for 400 cycles, and a discharge capacity of the 400th cycle and a thickness after the 400th cycle were recorded.

$$\text{Capacity retention rate after 400 cycles} = (\text{discharge capacity of the 400th cycle/discharge capacity of the first cycle}) \times 100\%.$$

$$\text{Cycling gas production: dwelling rate after 400 cycles} = ((\text{thickness after the 400th cycle--initial thickness})/\text{initial thickness})) \times 100\%.$$

5. High-temperature storage test

Four lithium-ion batteries in each group of lithium-ion batteries in the examples and comparative examples were taken. In an environment at about 25°C, charging was performed at a constant current rate of 0.5C until a voltage was higher than about 4.2 V, and charging was performed at a constant voltage of about 4.2 V until a current was lower than 0.05C, so that the batteries were in a 4.2 V fully-charged state. Thicknesses of the fully-charged batteries (thicknesses after initial full charge) before storage were measured. The batteries in a fully-charged state were placed in an oven at about 85°C and stored for about 24 hours, and then thicknesses of the batteries after storage were measured.

$$\text{Thickness swelling rate after storage at 85°C for 24 hours} = ((\text{Thickness after storage at 85°C for 24 hours--Thickness after initial fully-charge})/\text{Thickness after initial fully-charge}) \times 100\%.$$

6. Method for testing compacted density (PD):

A cold pressed positive electrode was taken. Six positive electrode material layers and six positive electrode current collectors were punched by using a 1540.25 mm$^2$ mould. A total weight Mc g of the six positive electrode material layers and a total weight Mb g of the six current collectors were weighed by using an analytical balance (electronic balance FA2004B made by Shanghai Jingke Tianmei Scientific Instrument Co., Ltd.). An average thickness of the six positive electrode material layers and an average thickness of the six current collectors as measured by using a micrometer were Dc mm and Db mm. PD=[(Mc-Mb)/6]/(Dc-Db)/1540.25×1000), and a unit was g/ml.

7. Test of discharge capacity retention rate at 10C

Lithium-ion batteries were left standing for 30 minutes in a 25°C environment, then charged to 4.2 V at a constant current rate of 0.5C, charged to 0.05C at a constant voltage of 4.2 V, and left standing for 30 minutes, and then discharged to 2.8 V at a rate of 0.2C, where a discharge capacity at that point was recorded as an actual capacity C1 of the lithium-ion batteries; then the lithium-ion batteries were left standing for 30 minutes, then charged to 4.2 V at a constant current rate of 0.5C, charged to 0.05C at a constant voltage of 4.2 V, and left standing for 30 minutes, and then discharged to 2.8 V at a rate of 10C, where a discharge capacity at that point was recorded as an actual capacity C2 of the lithium-ion batteries. A discharge capacity retention rate at 10C was calculated by using the following formula.

$$\text{Discharge capacity retention rate at } 10C = C2/C1 \times 100\%.$$

8. Method for calculating N

A retention rate P(N) after the N-th cycle and a swelling rate of the electrochemical apparatus after the N-th cycle during cycling at 45°C were obtained by using a method for testing cycling performance, then a minimum N obtained by satisfying conditions was a value of N, where the conditions were: a difference between a retention rate after the (N-3)-th cycle before the N-th cycle and a retention rate after the (N+3)-th after the N-th cycle (N>400) was P(N-3)-P(N+3)>10%, and the swelling rate of the electrochemical apparatus after the N-th cycle was less than 10%.

9. Test of elongation of positive electrode material

An active material was obtained in the following method: A fully discharged cell was disassembled to obtain a fully discharged positive electrode; then the fully discharged positive electrode was soaked in a DMC solvent for 48 hours, followed by washing, drying, scraping for powder, and sintering at 500°C in an oxygen atmosphere for about 6 hours to remove a conductive agent and a binder, to obtain a positive electrode material.

Elongation was calculated under a specified condition: The positive electrode material, acetylene black (conductive agent), and polyvinylidene fluoride (binder) were uniformly mixed at a ratio of 96.0:2.0:2.0, an appropriate amount of N-methylpyrrolidone was added, then the resulting mixture was fully stirred to prepare a uniform slurry, the slurry was applied on a 10 $\mu$m Al foil (current collector) at a surface density of 90 g/m$^2$, followed by drying. An electrode plate with a length of 1 m was taken and cold pressed by controlling a cold pressing compacted density to be 3.5 g/m$^3$ to obtain a cold pressed electrode plate with a length of L, where the elongation of the positive electrode material was (L-1)/1.

Table 1 shows parameters and evaluation results of Examples 1 to 13 and Comparative Example 1.

**Table 1**

| Example | Composition | Integral intensity of $CO_2$ (nmol/mg) | Doping element | Doping amount (ppm) | N | Swelling rate after N cycles | Capacity per gram (mAh/g) | Swelling rate after storage at 85°C for 24 hours | Discharge capacity retention rate at 10C | Retention rate after 400 cycles | Swelling rate after 400 cycles |
|---|---|---|---|---|---|---|---|---|---|---|---|
| 1 | $LiNi_{0.83}Co_{0.12}Mn_{0.05}O_2$ | 1800 | / | / | 500 | 8.5% | 200 | 15% | 90% | 80% | 8% |
| 2 | $LiNi_{0.5}Co_{0.2}Mn_{0.3}O_2$ | 1200 | / | / | 800 | 8.0% | 170 | 10% | 91% | 87% | 6.5% |
| 3 | $LiNi_{0.83}Co_{0.12}Al_{0.05}O_2$ | 1700 | / | / | 530 | 8.0% | 195 | 13% | 87% | 83% | 7.0% |
| 4 | $LiNi_{0.88}Co_{0.07}Mn_{0.05}O_2$ | 2000 | / | / | 450 | 8.9% | 204 | 16% | 88% | 76% | 8.6% |
| 5 | $LiNi_{0.83}Co_{0.12}Mn_{0.05}O_2$ | 2000 | / | / | 470 | 8.2% | 200 | 16% | 90% | 80% | 8% |
| 6 | $LiNi_{0.83}Co_{0.12}Mn_{0.05}O_2$ | 1500 | / | / | 540 | 8.0% | 200 | 12% | 88% | 82% | 7% |
| 7 | $LiNi_{0.83}Co_{0.12}Mn_{0.05}O_2$ | 1200 | / | / | 600 | 8.0% | 199 | 9% | 87% | 83% | 6% |
| 8 | $LiNi_{0.83}Co_{0.12}Mn_{0.047}Zr_{0.003}O_2$ | 1000 | Zr | 3000 | 700 | 7.6% | 199 | 8% | 88% | 85% | 6% |

Table 1 shows influence of controlling the integral intensity of $CO_2$ of the positive electrode material with a specific proportion of Li on high-temperature storage performance, high-temperature cycling retention rate, and high-

| Example | Composition | Integral intensity of $CO_2$ (nmol/mg) | Doping element | Doping amount (ppm) | N | Swelling rate after N cycles | Capacity per gram (mAh/g) | Swelling rate after storage at 85°C for 24 hours | Discharge capacity retention rate at 10C | Retention rate after 400 cycles | Swelling rate after 400 cycles |
|---|---|---|---|---|---|---|---|---|---|---|---|
| 9 | $LiNi_{0.83}Co_{0.12}Mn_{0.047}Al_{0.003}O_2$ | 1000 | Al | 3000 | 700 | 8.0% | 198 | 8% | 87% | 86% | 6% |
| 10 | $LiNi_{0.83}Co_{0.12}Mn_{0.047}Sr_{0.003}O_2$ | 1100 | Sr | 3000 | 670 | 8.2% | 199 | 9% | 87% | 85% | 7% |
| 11 | $LiNi_{0.83}Co_{0.12}Mn_{0.047}W_{0.003}O_2$ | 900 | W | 3000 | 710 | 6.8% | 200 | 7% | 87% | 86% | 5.5% |
| 12 | $LiNi_{0.83}Co_{0.12}Mn_{0.47}Zr_{0.001}O_2$ | 1080 | Zr | 1000 | 650 | 8.1% | 200 | 8% | 88% | 82% | 6.5% |
| 13 | $LiNi_{0.83}Co_{0.12}Mn_{0.047}Zr_{0.005}O_2$ | 910 | Zr | 5000 | 760 | 7.5% | 198 | 7% | 87% | 87% | 5.5% |
| 1 Comparative Example | $LiNi_{0.83}Co_{0.12}Mn_{0.005}O_2$ | 3000 | / | / | 300 | 15.0% | 200 | 21% | 67% | 53% | 29% |

temperature cycling gas production performance, including influence on the composition, doping elements, and doping amounts of the positive electrode material. In Table 1, the amount of element B in the examples and comparative examples is 0 ppm; and the average particle size of the primary particles is 1.8 $\mu$m, the coating weight is 1.2 g/cm$^2$, the compacted density is 3.5 g/cm$^3$, and 1 g positive electrode material includes 0 g 1,3,6-hexanetricarbonitrile.

It can be seen from test results of Examples 1 to 13 and Comparative Example 1 that values of N, discharge capacity retention rates at 10C, and retention rates after 400 cycles of Examples 1 to 13 are higher than those of Comparative Example 1, and swelling rates after storage at 85°C for 24 hours and swelling rates after 400 cycles of Examples 1 to 13 are lower than those of Comparative Example 1. Therefore, it can be seen that when a mass percentage of element Li of the positive electrode in the positive electrode active substance layer as tested using an inductively coupled plasma spectrometer (ICP) ranges from 1.45% to 1.55%, and an integral intensity of $CO_2$ obtained by testing the positive electrode using a differential electrochemical mass spectrometry is Q$\leq$2000 nmol/mg, the high-temperature cycling performance of the lithium-ion battery can be enhanced, the gas production at high temperature can be reduced, and safety and reliability of the battery can be improved.

By comparing Examples 1 to 4, it can be seen that positive electrode materials with different compositions are used in Examples 1 to 4, reduction of amount of Ni in the positive electrode material causes obvious reduction in integral intensity of $CO_2$, indicating that an amount of oxygen released by the positive electrode material under a high-temperature condition is reduced, $CO_2$ gas produced by oxidization of the electrolyte is reduced, and therefore storage performance and cycling performance of the electrochemical apparatus under a high-temperature condition can be significantly improved.

By comparing Example 1 with Example 3, it can be seen that gas production during high-temperature storage and gas production during high-temperature cycling in Example 3 are less than those in Example 1. This is because element Mn in Example 1 is replaced by element Al in Example 3, so that oxygen in the structure can be better stabilized, the integral intensity of $CO_2$ can be reduced, and high-temperature performance can be improved.

By comparing Example 1 and Examples 5 to 7 with Comparative Example 1, it can be seen that Example 1 and Examples 5 to 7 have the same composition of positive electrode material as Comparative Example 1. In Example 1 and Examples 5 to 7, cooling parameters after sintering are controlled to reduce the integral intensity of $CO_2$ to 1200 nmol/mg to 2000 nmol/mg, so that an amount of oxygen released by the positive electrode material in a highly delithiated state is greatly reduced, interface reactions between the positive electrode material and the electrolyte are suppressed, and storage performance at 85°C and high-temperature cycling performance of the lithium-ion battery are significantly improved.

Compared with Comparative Example 1, in Example 1 and Examples 5 to 7, the N-th (N>400) cycle is present during cycling at 45°C, a difference between a capacity retention rate P(N-3) after the (N-3)-th cycle and a retention rate P(N+3) after the (N+3)-th cycle is P(N-3)-P(N+3)>10%, and a swelling rate of the electrochemical apparatus after the N-th cycle is less than 10%. For example, in Example 1, a difference between a retention rate after the 497th cycle and a retention rate after the 503th cycle is greater than 10%, and a swelling rate after the 500th cycle is less than 10%, indicating that the electrochemical apparatus in Example 1 has functional failure before and after the 500th cycle, that is, the retention rate is quickly reduced after a specified cycle life ends, avoiding a safety risk caused by continuing to work. However, in Comparative Example 1, there are no such characteristics, high-temperature cycling performance is poor (a retention rate after 400 cycles is 53%), and there is a high safety risk (a swelling rate after 400 cycles reaches 29%).

Examples 8 to 13 show impact of different doping elements and doping amounts on the integral intensity of $CO_2$ and improvement in high-temperature storage and high-temperature cycling performance made by controlling the doping elements and the doping amounts. Compared with Example 1, Examples 8 to 11 have the reduced integral intensity of $CO_2$ by doping Zr, Al, Sr, and W respectively and make further improvement in high-temperature performance of the lithium-ion battery. Different doping elements achieve similar effects, where element Al and element W are better, but introduction of Al may reduce the capacity per gram. By comparing Example 8 and Examples 12 and 13, it can be seen that increase of the doping amount causes further reduction in the integral intensity of $CO_2$, but an excessively high doping amount may reduce the capacity per gram.

Table 2 shows parameters and evaluation results of Example 8 and Examples 14 to 17.

**Table 2**

| Example | Composition | Integral intensity of $CO_2$ (nmol/mg) | Proportion of B (ppm) | Average particle size of primary particles ($\mu m$) | N | Swelling rate after N cycles | Capacity per gram (mAh/g) | Swelling rate after storage at 85°C for 24 hours | Retention rate after 400 cycles | Swelling rate after 400 cycles |
|---|---|---|---|---|---|---|---|---|---|---|
| 8 | $LiNi_{0.83}Co_{0.12}Mn_{0.047}Zr_{0.003}O_2$ | 1000 | 0 | 1.8 | 760 | 7.5% | 199 | 8% | 85% | 6% |
| 14 | $LiNi_{0.83}Co_{0.12}Mn_{0.047}Zr_{0.003}O_2$ | 800 | 400 | 1.8 | 770 | 7.5% | 201 | 7% | 86% | 6% |
| 15 | $LiNi_{0.83}Co_{0.12}Mn_{0.047}Zr_{0.003}O_2$ | 900 | 800 | 1.8 | 800 | 7.1% | 202 | 7% | 88% | 5.5% |
| 16 | $LiNi_{0.83}Co_{0.12}Mn_{0.047}Zr_{0.003}O_2$ | 1150 | 0 | 1.5 | 560 | 8.8% | 201 | 8% | 79% | 8% |
| 17 | $LiNi_{0.83}Co_{0.12}Mn_{0.047}Zr_{0.003}O_2$ | 830 | 0 | 2.5 | 810 | 7.5% | 197 | 7% | 87% | 5% |

Table 2 shows influence of the proportion of element B and the average particle size of the primary particles on high-temperature storage performance, high-temperature cycling retention rate, and high-temperature cycling gas production performance. In Table 2, the doping element is Zr, the doping amount is 3000 ppm, the coating weight of the positive electrode is 1.2 g/cm$^2$, the compacted density of the positive electrode is 3.5 g/cm$^3$, and the amount of 1,3,6-hexanetricarbonitrile added is 0 g.

It can be seen from Example 8 and Examples 14 and 15 that coating with a specific proportion of B can improve surface stability of the material, reduce the integral intensity of $CO_2$ of the positive electrode, and improve high-temperature storage performance and high-temperature cycling performance of the lithium-ion battery. However, when the proportion of element B is so high as to exceed the proportion of element Zr, excess B causes significantly degraded rate performance and also increases gas production at high temperature, and therefore, preferably, the mass percentage of element Zr is greater than or equal to the mass percentage of element B in the positive electrode material.

It can be seen from Example 8 and Examples 16 and 17 that the sintering temperature is adjusted to increase the average particle size of the primary particles of the positive electrode material, which can improve high-temperature cycling performance and high-temperature storage performance of the lithium-ion battery. This is because increase of the particle size of the primary particles reduces contact and side reactions between the surface of the positive electrode material and the electrolyte, thereby reducing the integral intensity of $CO_2$ and improving high-temperature performance. An excessively large average particle size of the primary particles reduces Li$^+$ migration paths and impacts the capacity per gram. An excessively small average particle size of the primary particles may increase side reactions on surfaces of the particles, increasing gas production at high temperature and impacting high-temperature cycling performance. Therefore, when the average particle size of the primary particles ranges from 1.5 μm to 2.5 μm, low high-temperature gas production and good high-temperature cycling performance can be both achieved.

Table 3 shows parameters and evaluation results of Example 1 and Examples 18 and 19.

| Example | Composition | D$_v$50 of secondary particles (μm) | FWHM1 of secondary particles | Integral intensity of $CO_2$ (nmol/mg) | Capacity per gram (mAh/g) | Swelling rate after storage at 85°C for 24 hours | Retention rate after 400 cycles | Swelling rate after 400 cycles |
|---|---|---|---|---|---|---|---|---|
| 1 | LiNi$_{0.83}$Co$_{0.12}$Mn$_{0.05}$O$_2$ | / | / | 1800 | 200 | 15% | 80% | 8% |
| 18 | LiNi$_{0.83}$Co$_{0.12}$Mn$_{0.05}$O$_2$ | 10 | 0.19° | 1400 | 201 | 12% | 86% | 7.5% |
| 19 | LiNi$_{0.83}$Co$_{0.12}$Mn$_{0.05}$O$_2$ | 9 | 0.20° | 1500 | 201 | 14% | 84% | 7.8% |
| Comparative Example | | | | | | | | |
| 2 | LiNi$_{0.83}$Co$_{0.12}$Mn$_{0.05}$O$_2$ | 5 | 0.21° | 2200 | 202 | 14% | 81% | 7.9% |

Table 3 shows influence of the design of using primary particles and secondary particles in combination in the positive electrode on high-temperature storage performance, high-temperature cycling retention rate, and high-temperature cycling gas production performance. In Table 3, no doping element is applied, D$_v$50 of the primary particles is 3.5 μm, FWHM2 of the primary particles is 0.15°, the coating weight of the positive electrode is 1.2 g/cm$^2$, the compacted density of the positive electrode is 3.5 g/cm$^3$, and the amount of 1,3,6-hexanetricarbonitrile added is 0 g.

It can be seen from Comparative Example 2, Example 1, and Examples 18 and 19 that compared with the design of using one type of particles as in Example 1, primary particles and secondary particles are used in combination in Example 19, where particle sizes of the primary particles and the secondary particles satisfy a specified size relationship, which can achieve a greater bulk density. In this way, during cold pressing for manufacturing the electrode plate, a same compacted density can be achieved under less pressure, breakage in particles can be reduced, and high-temperature storage and high-temperature cycling performance can be improved. In addition, the sintering temperature and the particle size are controlled to enable full widths at half maximum FWHM1 of diffraction peaks of plane (003) in X-ray diffraction spectrums of the primary particles and secondary particles to be within specified ranges respectively, where the secondary particle has an excellent extractable capacity and the primary particle has a more stable structure and less reaction interfaces. The primary particle and the secondary particle cooperate to achieve high-temperature performance. Compared with Example 19, in Example 18, $D_v50$ of the secondary particles is increased under a condition that the relationship between sizes of the primary particles and the secondary particles is satisfied, which can further reduce exposed surfaces of the primary particles, suppress side reactions on the surfaces, and improve cycling and storage performance. Compared with Example 19, Comparative Example 2 also uses a design of using primary particles and secondary particles in combination. However, $D_v50$ of the primary particles and $D_v50$ of the second particles do not satisfy that $D_v50$ of the secondary particles is greater than 1.5 times $D_v50$ of the primary particles. As a result, optimal gradation of large and small particles cannot be achieved, and cycling performance and high-temperature performance are constrained.

Table 4 shows parameters and evaluation results of Example 8 and Examples 20 to 23.

**Table 4**

| Example | Composition | Integral intensity of $CO_2$ (nmol/mg) | Coating weight $(g/cm^2)$ | Compacted density $(g/cm^3)$ | N | Swelling rate after N cycles | Discharge capacity retention rate at 10C | Retention rate after 400 cycles | Swelling rate after 400 cycles |
|---|---|---|---|---|---|---|---|---|---|
| 8 | $LiNi_{0.83}Co_{0.12}Mn_{0.047}Zr_{0.003}O_2$ | 1000 | 1.20 | 3.5 | 700 | 7.6% | 88% | 85% | 6% |
| 20 | $LiNi_{0.83}Co_{0.12}Mn_{0.047}Zr_{0.003}O_2$ | 1000 | 0.78 | 3.5 | 870 | 7.3% | 90% | 89% | 5% |
| 21 | $LiNi_{0.83}Co_{0.12}Mn_{0.047}Zr_{0.003}O_2$ | 1000 | 1.62 | 3.5 | 660 | 9.0% | 86% | 80% | 8% |
| 22 | $LiNi_{0.83}Co_{0.12}Mn_{0.047}Zr_{0.003}O_2$ | 910 | 1.20 | 3.1 | 780 | 6.5% | 87% | 90% | 5% |
| 23 | $LiNi_{0.83}Co_{0.12}Mn_{0.047}Zr_{0.003}O_2$ | 1150 | 1.20 | 3.55 | 500 | 9.4% | 88% | 78% | 8% |

Table 4 shows influence of coating weight and compacted density of the positive electrode on high-temperature cycling retention rate and high-temperature cycling gas production performance. In Table 4, the doping element is Zr, the doping amount is 3000 ppm, the amount of element B in the examples is 0, the amount of 1,3,6-hexanetricarbonitrile added is 0 g, the capacity per gram is 199 mAh/g, and the average particle size of the primary particles is 1.8 $\mu$m.

It can be seen from Example 8 and Examples 20 and 21 that reduction of the coating weight of the positive electrode can enhance high-temperature cycling performance of the lithium-ion battery. This is because small coating weight of the positive electrode can lead to less transmission paths of lithium ions in the positive electrode and lower temperature rise during cycling, thereby improving high-temperature cycling performance.

It can be seen from Examples 22 and 23 that an excessively high compacted density significantly reduces high-temperature cycling performance of the lithium-ion battery, causing breakage in particles of the positive electrode material, and increases the contact area between the positive electrode material and the electrolyte, increasing side reactions. In Examples 22 and 23, the proper compacted density is selected, so that extrusion and breakage in the particles of the positive electrode material are reduced, exposure of fresh surface in the material is reduced, and the integral intensity of $CO_2$ is reduced, thereby improving high-temperature cycling of the lithium-ion battery.

Table 5 shows parameters and evaluation results of Example 8 and Examples 24 to 26.

**Table 5**

| Example | Composition | Integral intensity of $CO_2$ (nmol/mg) | N (cycles) | Swelling rate after N cycles | Amount of 1,3,6-hexanetricarbonitrile in 1 g positive electrode material (g) | Swelling rate after storage at 85°C for 24 hours | Retention rate after 400 cycles | Swelling rate after 400 cycles |
|---|---|---|---|---|---|---|---|---|
| 8 | $LiNi_{0.83}Co_{0.12}Mn_{0.047}Zr_{0.003}O_2$ | 1000 | 700 | 7.6% | 0.000 | 8% | 85% | 6% |
| 24 | $LiNi_{0.83}Co_{0.12}Mn_{0.047}Zr_{0.003}O_2$ | 950 | 650 | 7.1% | 0.001 | 7.5% | 86% | 6% |
| 25 | $LiNi_{0.83}Co_{0.12}Mn_{0.047}Zr_{0.003}O_2$ | 890 | 600 | 6.5% | 0.003 | 7% | 88% | 5.5% |
| 26 | $LiNi_{0.83}Co_{0.12}Mn_{0.047}Zr_{0.003}O_2$ | 800 | 520 | 6.0% | 0.005 | 6% | 89% | 5% |

Table 5 shows influence of a mass ratio of the multi-nitrile compound in the electrolyte to the positive electrode material on the capacity per gram of the positive electrode, high-temperature cycling performance, high-temperature storage performance, and rate performance of the lithium-ion battery. The doping element in the examples in Table 5 is Zr, and the doping amount is 3000 ppm; the proportion of element B in the examples is 0, the average particle size of the primary particles is 1.8 $\mu$m, the coating weight is 1.2 g/cm$^2$, the compacted density is 3.5 g/cm$^3$, and the capacity per gram is 199 mAh/g.

It can be seen from Examples 8 and Examples 24 to 26 that when the electrolyte includes 0.001 g to 0.005 g multi-nitrile compound based on per gram of the positive electrode material, high-temperature storage performance and high-temperature cycling performance of the lithium-ion battery can be further improved. An excessively high proportion of the multi-nitrile compound in the electrolyte makes no further improvement in high-temperature storage, but has a serious impact on rate performance, thereby impacting cycling performance. Therefore, when the mass ratio of the positive electrode material to the multi-nitrile compound is limited to be 1:(0.001 to 0.005), good high-temperature storage performance and high-temperature cycling performance are achieved.

The above descriptions are only preferred embodiments of this application and explanations of the applied technical principles. Those skilled in the art should understand that the scope disclosed in this application is not limited to the technical solutions formed by the specific combination of the above technical features, and should also cover other technical solutions formed by any combination of the above technical features or their equivalent features, for example, a technical solution formed by replacement between the above features and technical features having similar functions disclosed in this application.

**Claims**

1. A positive electrode, **characterized by** comprising:

   a positive electrode current collector and a positive electrode active substance layer, wherein
   the positive electrode active substance layer is located in at least partial region of one surface or two surfaces of the positive electrode current collector, the positive electrode active substance layer comprises a positive electrode material, and the positive electrode material comprises element Li; and
   when a mass percentage of element Li of the positive electrode in the positive electrode active substance layer as tested using an inductively coupled plasma spectrometer (ICP) ranges from 1.45% to 1.55%, an integral intensity of $CO_2$ obtained by testing the positive electrode using a differential electrochemical mass spectrometry is Q≤2000 nmol/mg.

2. The positive electrode according to claim 1, **characterized in that**

   the positive electrode material comprises $LiNi_xCo_yM1_{1-x-y-z}M2_zO_2$,
   wherein 0.5≤x<1, 0≤y<0.5, and 0≤z≤0.005; M1 comprises at least one of Mn or Al; and M2 comprises at least one of Mg, Ti, Zr, Ce, Sr, Y, Hf, Ba, Nb, V, Al, Ge, Sn, W, Mo, Si, or B.

3. The positive electrode according to claim 1, **characterized in that**
   the positive electrode material contains element Zr and element B, and a mass percentage of element Zr in the positive electrode material is greater than or equal to that of element B.

4. The positive electrode according to claim 1, **characterized in that**

   the positive electrode material comprises primary particles and secondary particles, wherein $D_v50$ of the secondary particles is greater than 1.5 times $D_v50$ of the primary particles, wherein
   a full width at half maximum FWHM1 of a diffraction peak of plane (003) in an X-ray diffraction spectrum of the secondary particles satisfies 0.140°≤FWHM1≤0.25°; and
   a full width at half maximum FWHM2 of a diffraction peak of plane (003) in an X-ray diffraction spectrum of the primary particles satisfies 0.12°≤FWHM2≤0.19°.

5. The positive electrode according to claim 1, **characterized in that**

   the positive electrode material comprises primary particles, wherein
   an average particle size of the primary particles ranges from 1.5 $\mu$m to 2.5 $\mu$m.

6. The positive electrode according to claim 1, **characterized in that**

   a coating weight of the positive electrode active substance layer ranges from 0.78 g/m$^2$ to 1.62 g/m$^2$, and a compacted density of the positive electrode active substance layer ranges from 3.1 g/cm$^3$ to 3.55 g/cm$^3$.

7. The positive electrode according to claim 1, **characterized in that** elongation of the positive electrode material is less than or equal to 1%.

8. An electrochemical apparatus, **characterized by** comprising the positive electrode according to any one of claims 1 to 7, an electrolyte, a negative electrode, and a separator, wherein the separator is located between the positive electrode and the negative electrode.

9. The electrochemical apparatus according to claim 8, **characterized in that** at least one of the following conditions (a) and (b) is satisfied:

   (a) the N-th cycle is present during cycling of the electrochemical apparatus at 45°C, wherein N>400, a capacity retention rate P(N-3) after the (N-3)-th cycle and a capacity retention rate P(N+3) after the (N+3)-th cycle satisfy P(N-3)-P(N+3)>10%, and a volume swelling rate of the electrochemical apparatus after the N-th cycle is less than 10%; and
   (b) the electrolyte comprises a multi-nitrile compound, wherein the multi-nitrile compound comprises at least one of 1,3,6-hexanetricarbonitrile, 1,2,6-hexanetricarbonitrile, 1,3,5-pentanetricarbonitrile, 1,2,3-tris(2-cyanoethoxy)propane, succinonitrile, or adiponitrile, wherein a mass ratio of the positive electrode material to the multi-nitrile compound is 1:(0.001 to 0.005).

10. An electronic apparatus, **characterized by** comprising the electrochemical apparatus according to any one of claims 8 and 9.

## INTERNATIONAL SEARCH REPORT

| | International application No. |
| --- | --- |
| | **PCT/CN2021/079807** |

**A. CLASSIFICATION OF SUBJECT MATTER**

H01M 4/36(2006.01)i;  H01M 4/525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI: 正极, 活性物质, 阴极, CO2, 二氧化碳, FWHM, 半宽, 半峰宽, cathode, "active material", electrode, "carbon dioxide", half, width

**C. DOCUMENTS CONSIDERED TO BE RELEVANT**

| Category* | Citation of document, with indication, where appropriate, of the relevant passages | Relevant to claim No. |
| --- | --- | --- |
| X | CN 111864196 A (SK INNOVATION CO., LTD.) 30 October 2020 (2020-10-30) description, paragraphs 0030-0137, and tables 1-3 | 1-3, 5-10 |
| A | CN 104282903 A (SAMSUNG SDI CO., LTD.) 14 January 2015 (2015-01-14) entire document | 1-10 |
| A | CN 101777653 A (TOYO TANSO CO., LTD.) 14 July 2010 (2010-07-14) entire document | 1-10 |
| A | US 2012280172 A1 (SANYO ELECTRIC CO., LTD.) 08 November 2012 (2012-11-08) entire document | 1-10 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 November 2021** | **25 November 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/079807**

| Patent document cited in search report | | | Publication date (day/month/year) | Patent family member(s) | | | Publication date (day/month/year) |
|---|---|---|---|---|---|---|---|
| CN | 111864196 | A | 30 October 2020 | EP | 3734735 | A1 | 04 November 2020 |
| | | | | US | 2020350579 | A1 | 05 November 2020 |
| | | | | KR | 20200126648 | A | 09 November 2020 |
| CN | 104282903 | A | 14 January 2015 | KR | 101785262 | B1 | 16 October 2017 |
| | | | | JP | 6508806 | B2 | 08 May 2019 |
| | | | | CN | 104282903 | B | 20 November 2018 |
| | | | | EP | 2824735 | A3 | 27 May 2015 |
| | | | | JP | 2015018803 | A | 29 January 2015 |
| | | | | EP | 2824735 | A2 | 14 January 2015 |
| | | | | US | 9184443 | B2 | 10 November 2015 |
| | | | | KR | 20150006283 | A | 16 January 2015 |
| | | | | US | 2015010819 | A1 | 08 January 2015 |
| | | | | EP | 2824735 | B1 | 26 December 2018 |
| CN | 101777653 | A | 14 July 2010 | WO | 2006106913 | A1 | 12 October 2006 |
| | | | | US | 2009278082 | A1 | 12 November 2009 |
| | | | | EP | 1873847 | A1 | 02 January 2008 |
| | | | | CN | 101147283 | A | 19 March 2008 |
| | | | | JP | 5208353 | B2 | 12 June 2013 |
| | | | | JP | 2006286240 | A | 19 October 2006 |
| | | | | EP | 1873847 | A4 | 25 May 2011 |
| | | | | KR | 20070116820 | A | 11 December 2007 |
| US | 2012280172 | A1 | 08 November 2012 | KR | 20090049554 | A | 18 May 2009 |
| | | | | US | 8197556 | B2 | 12 June 2012 |
| | | | | US | 2009119908 | A1 | 14 May 2009 |
| | | | | US | 8388703 | B2 | 05 March 2013 |
| | | | | JP | 2009140909 | A | 25 June 2009 |
| | | | | CN | 101436660 | A | 20 May 2009 |
| | | | | CN | 101436660 | B | 24 October 2012 |

Form PCT/ISA/210 (patent family annex) (January 2015)